# EUROPEAN PATENT APPLICATION

(11) **EP 2 654 170 A1**
(43) Date of publication of application: **23.10.2013**
(21) Application number: 11848068.0
(22) Date of filing: 02.11.2011
(51) Int. Cl.: H02J 7/02, H01M 10/44, H02J 1/00

(54) **CHARGER**

(30) Priority: 14.12.2010 JP 2010278110; 25.03.2011 JP 2011067159
(71) Applicant: Makita Corporation, Anjo-shi, Aichi 446-8502 (JP)
(72) Inventor: SAKAI Mamoru, Anjo-shi Aichi 446-8502 (JP); MORI Tatsuki, Anjo-shi Aichi 446-8502 (JP); KOBAYASHI Makihiro, Anjo-shi Aichi 446-8502 (JP)
(74) Representative: Schmidtchen, Jürgen Christian
(86) International application number: PCT/JP2011/075255
(87) International publication number: WO 2012/081323

(57) **Abstract**

An object of the present invention is to reduce electric power consumption of a charger as much as possible when charging is not performed, and also to improve operation performance of the charger.

A charger (10) according to the present invention includes a charging power source circuit for charging a battery, a power source control circuit that controls the charging power source circuit, a microcomputer (28) that operates the power source control circuit, and a constant voltage power source circuit (50) that supplies electric power to both the power source control circuit and the microcomputer (28). The microcomputer (28) is configured to permit or prohibit supply of electric power to the power source control circuit from the constant voltage power source circuit (50) to the power source control circuit.

## Description

### Technical Field

The present invention relates to a charger that includes a charging power source circuit for charging a battery that supplies electric power to an electric power tool, a power source control circuit that controls the charging power source circuit, a microcomputer that drives the power source control circuit, and a constant voltage power source circuit that supplies electric power to the power source control circuit and the microcomputer.

### Background Art

A charger related to the above is disclosed in Patent Document 1.
The charger disclosed in Patent Document 1 includes a charging power source circuit for charging a battery, a power source control circuit that controls the charging power source circuit, and a constant voltage power source circuit that supplies electric power to the power source control circuit. The constant voltage power source circuit is configured to stop supplying electric power to the power source control circuit when the battery is disconnected from the charger. Further, when the battery is connected to the charger, the constant voltage power source is configured to operate by use of electric power supplied from the battery.
The above construction can reduce unnecessary consumption of electric power of the charger when the charger is in preparation for charging.

### Prior art document

### Patent documents

Patent Document 1: Japanese Laid-Open Patent Publication No. 2006-254607 (Japanese Patent No. 4507191)

### Summary of the Invention

### Problems to be solved by the Invention

The above-described charger is configured to stop supplying electric power to the power source control circuit when the battery is disconnected from the charger. Therefore, even when charging of the battery is completed, electric power is still supplied to the power source control circuit with the battery being connected to the charger. That is, unnecessary electric power is consumed in the power source control circuit during the period from a time when charging of the battery is completed to a time when the battery is disconnected from the charger.
Further, since the constant voltage power source circuit is started by use of voltage power from the battery that is connected to the charger, it is difficult to start the constant voltage power source circuit in case the battery is left unused for a long time and the battery voltage becomes nearly 0 volts.

The present invention is made to solve the above-described problems, and the problems to be solved by the present invention are to reduce electric power consumption of the charger as much as possible while charging is not performed, and also to improve operation performance of the charger.

### Means for solving the Problems

The above problem can be solved by the inventions as defined in the appended claims.
According to the invention of claim 1, there is provided a charger including a charging power source circuit for charging a battery that supplies electric power to an electric power tool, a power source control circuit that controls the charging power source circuit, a microcomputer that operates the power source control circuit, and a constant voltage power source circuit that supplies electric power to the power source control circuit and a microcomputer. Further, the microcomputer is configured to permit or prohibit supply of electric power from the constant voltage power source circuit to the power source control circuit.

According to the present invention, a power source of the power source control circuit is configured to be turned on and off by the microcomputer. Because of this, for example, even when the battery is connected to the charger after charging is completed, electric power consumption of the charger can be reduced since the microcomputer turns off the power source of the power source control circuit when the charging of the battery is not performed.
Further, since the microcomputer is configured such that electric power is supplied from the constant voltage power source circuit of the charger, even when the battery is left unused for a long time and the battery voltage becomes nearly 0 volts, the microcomputer can be operated regardless of the battery voltage. As a result, charging is possible irrespective of a battery state, and the performance of the charger can be improved.

According to the invention of claim 2, a switch is provided between the constant voltage power source circuit and the power source control circuit, and the switch permits or prohibits the supply of electric power from the constant voltage power source circuit to the power source control circuit. Further, the microcomputer is configured to operate the switch.
In this way, since the supply of electric power to the power source control circuit is permitted or prohibited by the switch, the configuration is simple and advantageous in terms of cost.

According to the invention of claim 3, the constant voltage power source circuit includes a first constant voltage power source circuit that supplies electric power to the microcomputer and a second constant voltage power source circuit that supplies electric power to the power source control circuit. Further, the microcomputer is configured to operate the second constant voltage power source circuit.

According to the invention of claim 4, the microcomputer is configured to detect that the charger is connected to the battery or disconnected from the battery, and the microcomputer prohibits the supply of electric power to the power source control circuit, at least when the microcomputer detects that the charger is disconnected from the charger.
Because of this, for example, even when the battery is detached from the charger during charging, the power source of the power source control circuit can be turned off.

According to the invention of claim 5, the power source control circuit is configured to receive a charging permission signal from the microcomputer and to control the charging of the battery. Further, the microcomputer permits supply of electric power to the power source control circuit when the charging permission signal is output to the power source control circuit, and prohibits the supply of electric power to the power source control circuit when the output of the charging permission signal to the power source control circuit is stopped.
Because of this, when the charging of the battery is performed, it is ensured that the power source of the power source control circuit is turned on.

According to the invention of claim 6, a display circuit that displays a charging condition is provided, and when the microcomputer detects that the charger is connected to the battery, the microcomputer outputs to the display circuit a signal that indicates the charging condition.
Because of this, the charging condition can be recognized by the display circuit.
According to the invention of claim 7, the microcomputer outputs to the display circuit a signal that indicates turning off the display of the charging condition, after the microcomputer detects that the charger is disconnected from the battery and the disconnected condition continues for a predetermined time.
Because of this, electric power consumption in the display circuit can be reduced.

According to the invention of claim 8, the power source control circuit includes a current feedback circuit and/or a voltage feedback current circuit.
According to the invention of claim 9, the power source control circuit includes a circuit that detects temperature in the charger or temperature of an element in the charger.

### Effects of the Invention

According to the present invention, it is possible to reduce electric power consumption of the charger as much as possible while charging is not performed. Further, operation performance of the charger can be improved.

### Brief Description of Drawings

FIG. 1 is an electric circuit diagram showing a microcomputer, a charging power source circuit, a power source control circuit, and an electric power tool battery etc. of a charger according to an embodiment 1 of the present invention.
FIG. 2 is an electric circuit diagram showing the microcomputer and a constant voltage power source circuit etc. of the charger according to the embodiment 1 of the present invention.
FIG. 3 is a flowchart of a switching FET operation and a switching control circuit operation of the constant voltage power source circuit in the charger.
FIG. 4 is a timing diagram of the charger.
FIG. 5 is an electric circuit diagram showing a microcomputer and a constant voltage power source circuit of a charger according to an embodiment 2 of the present invention.

### Description of Preferred Embodiments

### [Embodiment 1]

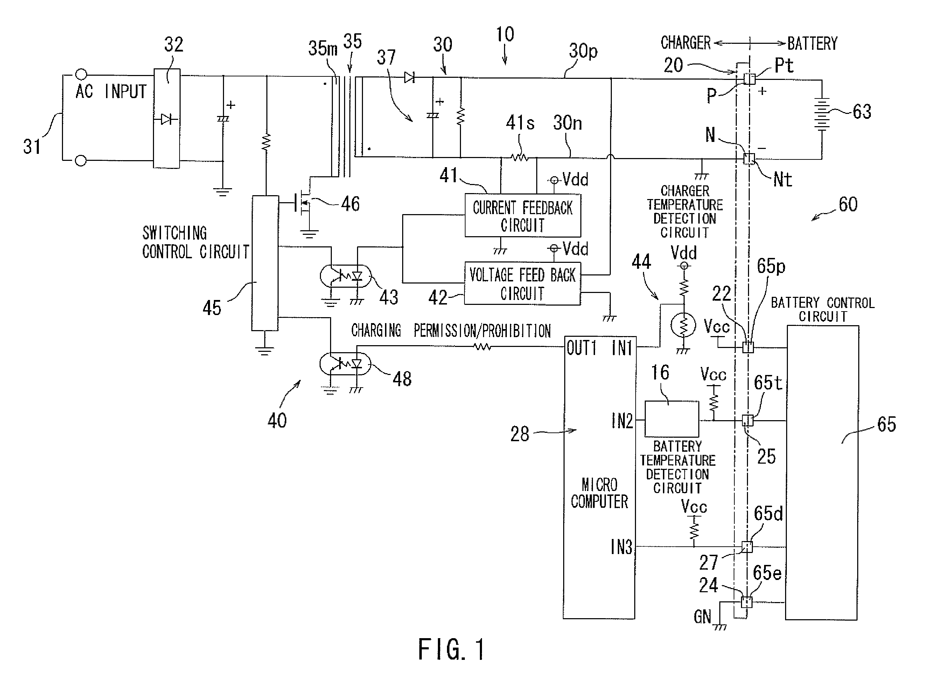

Hereinafter, a charger according to an embodiment 1 will be described with reference to FIG. 1 to FIG. 4.

### <Outline of Charger 10>

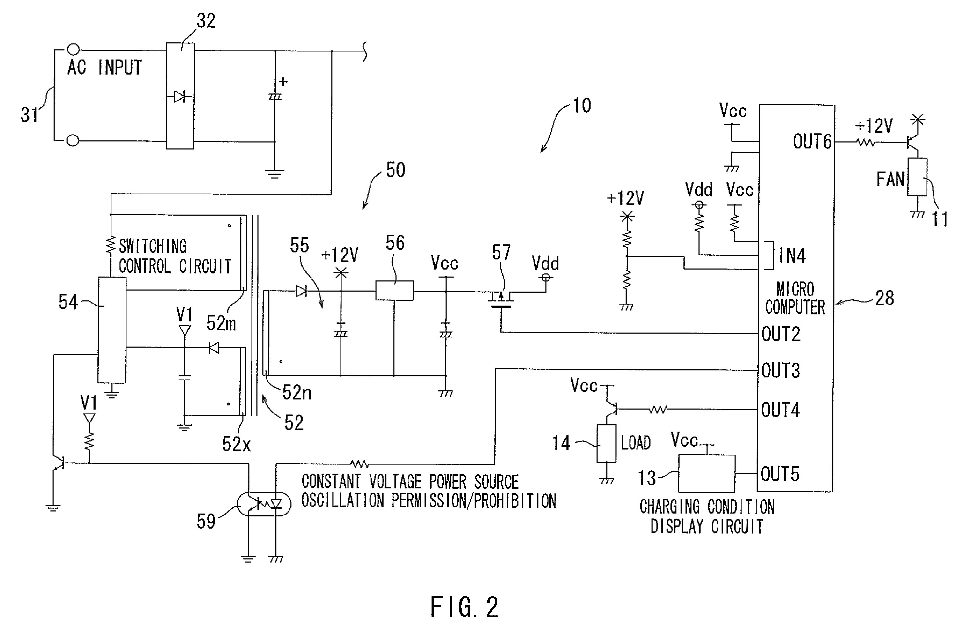

The charger 10 is a device for performing charging of an electric power tool battery 60. As shown in FIG. 1 and FIG. 2, the charger 10 includes a charging power source circuit 30, a power source control circuit 40, a microcomputer 28, and a constant voltage power source circuit 50.
The charging power source circuit 30 includes a power source circuit for performing charging of a cell 63 of the electric power tool battery 60. The power source control circuit 40 is for controlling charging based on signals from the microcomputer 28, and includes a feedback circuit of charge voltage and charge current and a circuit for detecting temperature or the like in the charger. The constant voltage power source circuit 50 is for supplying electric power to the power source control circuit 40, the microcomputer 28, a battery control circuit 65 of the electric power tool battery 60, etc.
The microcomputer 28 is configured to drive the power source control circuit 40 based on signals that are transmitted from the battery control circuit 65 of the electric power tool battery 60, and also configured to control the constant voltage power source circuit 50. Further, the microcomputer 28 is configured to monitor a charging condition, raise an alarm, etc.

The charging power source circuit 30, the power source control circuit 40, the microcomputer 28, and the constant voltage power source circuit 50 of the charger 10 are accommodated in a housing (not shown), and a connection portion 20 to which the electric power tool battery 60 is connected is provided on an upper surface of the housing.
As shown in FIG. 1, charging terminals P and N of the charging power source circuit 30 are provided in the connection portion 20, and terminals Pt (+) and Nt (-) of the cell 63 of the electric power tool battery 60 are connected to the charging terminals P and N when the electric power tool battery 60 is connected to the charger 10. In addition, a power source terminal 22 and a ground terminal 24 are provided in the connection portion 20, and a power source terminal 65p and a ground terminal 65e of the battery control circuit 65 of the electric power tool battery 60 are connected to the power source terminal 22 and the ground terminal 24, respectively. Further, an analog terminal 25 and a digital terminal 27 are provided in the connection portion 20, and a battery temperature signal terminal 65t and a communication terminal 65d of the battery control circuit 65 are connected to the analog terminal 25 and the digital terminal 27, respectively.

### <Charging Power Source Circuit 30>

As shown in FIG. 1, the charging power source circuit 30 includes a rectifier 32 that converts alternating current power, which is supplied from an outlet (not shown) through a plug 31, to direct current power, a transformer 35 that steps down voltage after rectification, a smoothing circuit 37 that is provided on a secondary side of the transformer 35, and charging lines 30p and 30n. Further, the charging lines 30p and 30n are connected to charging terminals P and N of the connection portion 20, respectively.
Because of this, the electric power tool battery 60 is connected to the charger 10 and the direct current power is smoothened by the smoothing circuit 37, and then the smoothened direct current power can be supplied to the cell 63 of the electric power tool battery 60 through the charging lines 30p and 30n, charging terminals P and N, and the terminals Pt and Nt.
Here, as shown in FIG. 2, the plug 31 and the rectifier 32 are also used in the constant voltage power source circuit 50 as described below.

### <Power Source Control Circuit 40>

The power source control circuit 40 controls charging operation of the charging power source circuit 30 to the electric power tool battery 60 based on a charging permission signal (described below) from the microcomputer 28, and is configured to operate the charging power source circuit 30 in a stable manner. The power source control circuit 40 includes a current feedback circuit 41, a voltage feedback circuit 42, a photo-coupler for feedback 43, and a switching control circuit 45. Further, the power source control circuit 40 includes a charger temperature detection circuit 44 that detects the temperature in the charger 10 or the temperature of the element in the charger 10.
The current feedback circuit 41 amplifies the charge current signals, which are converted to voltage by a shunt resistor 41s, to a predetermined voltage level, and transmits the amplified signals to the switching control circuit 45. The voltage feedback circuit 42 steps down the charge voltage signals to a predetermined voltage level and transmits the stepped-down signals to the switching control circuit 45.

A photo-coupler for feedback 43 is configured to transmit the charge current signals and the charge voltage signals to the switching control circuit 45, while an electrical insulation between the current feedback circuit 41, the voltage feedback circuit 42, and the switching control circuit 45 is secured.
The switching control circuit 45 drives an electric power supplying FET 46, and the switching control circuit adjusts, by a PWM control (pulse width modulation control), electric power that is supplied to a primary winding 35m of the transformer 35 of the charging power source circuit 30 such that charge current values and charge voltage values approach set values. The switching control circuit 45 is configured to drive when the charging permission signal is input from the microcomputer 28 through a first photo-coupler 48. Further, the switching control circuit 45 is configured to stop when the charging permission signal is not input from the microcomputer 28.

### <Constant Voltage Power Source Circuit 50>

As shown in FIG. 2, the constant voltage power source circuit 50 includes a Vcc power source part (DC5V) that supplies electric power to the microcomputer 28, etc., a Vdd power source part (DC5V) that supplies electric power to the power source control circuit 40, etc., and a 12V power source part that supplies electric power to the cooling fan 11. The constant voltage power source circuit 50 includes a transformer 52, a switching control circuit 54, a smoothing circuit 55, a regulator 56, and a switching FET 57.
The transformer 52 includes a primary side winding 52m, a secondary side winding 52n, and a winding 52x for feedback, and is configured such that output voltage of the rectifier 32 of the charging power source circuit 30 is applied to the primary side winding 52m. The smoothing circuit 55 is connected to the secondary side of the transformer 52, that is, the secondary side winding 52n, and the output side of the smoothing circuit 55 is the 12V power source part.
In addition, the regulator 56, which steps down 12V voltage to 5V and maintains a constant voltage, is provided in the output side of the smoothing circuit 55. Further, the Vcc power source part (DC5V) is provided in the output side of the regulator 56. In addition, the Vdd power source part (DC5V) is connected to the Vcc power source part (DC5V) through the switching FET 57.

The switching FET 57 turned on and off based on a signal from the microcomputer 28. When the switching FET 57 is turned on, the Vcc power source part and the Vdd power source part are electrically connected to each other. That is, when the switching FET 57 is turned on, electric power is supplied from the Vcc power source part to the Vdd power source part. In addition, when the switching FET 57 is turned off, the Vdd power source part is disconnected from the Vcc power source part, and the voltage of the Vdd power source part becomes 0 volts.
The winding 52x for feedback of the transformer 52 detects voltage that is generated in the secondary side winding 52n, and inputs the voltage signals V1 (12V) to switching control circuit 54. A winding number of the winding 52x for feedback is set based on a winding ratio between the primary side winding 52m and the secondary side winding 52n.
The switching control circuit 54 is configured to operate based on an intermittent signal (intermittent oscillation is turned on) or a continuous signal (intermittent oscillation is turned off) from the microcomputer 28 that is input through a second photo-coupler 59. That is, when the continuous signal (intermittent oscillation is turned off) is input, the switching control circuit 54 drives an inner FET (not shown), and the switching control circuit adjusts electric power, which is supplied to the primary winding 52m of the transformer 52, by a PWM control (pulse width modulation control) such that the voltage of the secondary side winding 52n becomes 12V. Further, when the intermittent signal (intermittent oscillation is turned on) is input, the switching control circuit 54 intermittently performs a PWM control (pulse width modulation control).

As shown in FIG. 2, the cooling fan 11 is connected to the 12V power source part of the constant voltage power source circuit 50. Further, the cooling fan 11 is driven based on an output signal from the microcomputer 28. The cooling fan 11 is used for cooling the electric power tool battery 60 and the charger 10.
The microcomputer 28, a charging condition display circuit 13 that displays a charging condition, a load of the warning circuit 14, and a battery temperature detection circuit 16 (refer to FIG. 1) are connected to the Vcc power source part (DC5V) of the constant voltage power source circuit 50. In addition, as shown in FIG. 1, when the electric power tool battery 60 is connected to the charger 10, the battery control circuit 65 of the electric power tool battery 60 is connected to the Vcc power source part (DC5V).
Further, as shown in FIG. 1, the current feedback circuit 41, the voltage feedback circuit 42, and the charger temperature detection circuit 44 of the power source control circuit 40 are connected to the Vdd power source part (DC5V) of the constant voltage power source circuit 50.

### <Microcomputer 28>

The microcomputer 28 is configured to drive the power source control circuit 40 based on signals from the battery control circuit 65 of the electric power tool battery 60, and also is configured to control the constant voltage power source circuit 50. In addition, the microcomputer 28 is configured to monitor a charging condition and raise an alarm, and also is configured to detect a connected and unconnected state between the charger 10 and the electric power tool battery 60.
That is, when the charger 10 and the electric power tool battery 60 are connected to each other, as shown in FIG. 1, the Vcc power source part (DC5V) of the constant voltage power source circuit 50 is connected to the battery control circuit 65 of the electric power tool battery 60. Further, the battery temperature detection circuit 16 is connected to the battery control circuit 65 to be operated, and a battery temperature signal of the battery temperature detection circuit 16 is input to an input terminal IN2 of the microcomputer 28. In addition, battery data is input from the battery control circuit 65 to an input terminal IN3 of the microcomputer 28 through the digital terminal 27. The microcomputer 28 detects the connection between the charger 10 and the electric power tool battery 60 by an input of the battery temperature signals of the battery temperature detection circuit 16. Further, when the charger 10 is disconnected from the electric power tool battery 60 and the battery temperature signals that is input to the input terminal IN2 are abnormal values, the microcomputer 28 is to detect disconnection (disconnected state) between the charger 10 and the electric power tool battery 60.

As shown in FIG. 1, a charger temperature signal is input from the charger temperature detection circuit 44 of the power source control circuit 40 to an input terminal IN1 of the microcomputer 28. In addition, the microcomputer 28 is configured to output a charging permission signal from an output terminal OUT1 to the switching control circuit 45 (first photo-coupler 48) of the power source control circuit 40, or is configured to stop the output of the charging permission signal. The charging permission signal permits charging, and the signal is output when the battery data from the battery control circuit 65 and the battery temperature signals of the battery temperature detection circuit 16 are normal and also the charging of the electric power tool battery 60 is not completed.
As shown in FIG. 2, the voltage signal of the 12V power source part, the voltage signal of the Vcc power source part, and the voltage signal of the Vdd power source part of the constant voltage power source circuit 50 are input to an input terminal IN4 of the microcomputer 28. Thus, voltage of the constant voltage power source circuit 50 can be monitored by the microcomputer 28.
The microcomputer 28 is configured to output ON and OFF signals from an output terminal OUT2 to the switching FET 57 of the constant voltage power source circuit 50. The ON signal of the switching FET 57 is output when the charging permission signal is output and also the microcomputer 28 detects the connection between the charger 10 and the electric power tool battery 60. That is, the switching FET 57 of the constant voltage power source circuit 50 is turned on while the charging of the electric power tool battery 60 is performed.

The microcomputer 28 is configured to output an intermittent signal (intermittent oscillation is turned on) or a continuous signal (intermittent oscillation is turned off) from an output terminal OUT3 to the switching control circuit 54 (second photo-coupler 59) of the constant voltage power source circuit 50. As described above, the continuous signal is for continuously performing a PWM control with respect to the switching control circuit 54. For this, when the continuous signal is input, the switching control circuit 54 continuously adjusts the electric power, which is supplied to the primary side winding 52m, by a PWM control such that the voltage of the second side winding 52n of the transformer 52 becomes 12V. The intermittent signal is for intermittently performing a PWM control with respect to the switching control circuit 54 and is configured to be turned on when the continuous signal are turned off. Since the switching control circuit 54 intermittently performs a PWM control when the intermittent signal is input, the electric power that is supplied to the primary side winding 52m becomes intermittently 0 volts.
In general, the microcomputer 28 is configured to output the continuous signal at the time of charging the electric power tool battery 60, and is configured to output the intermittent signal except for the time of the charging. However, even except for the time of the charging, the microcomputer 28 is configured to output the continuous signal (intermittent oscillation is turned off) when the voltage signals of the 12V power source part or the Vcc power source part are less than or equal to a threshold voltage (predetermined voltage), or when the cooling fan 11 etc. are operated.
In addition, a load of the warning circuit 14 etc. are connected to an output terminal OUT4 of the microcomputer 28, and the charging condition display circuit 13 that displays a charging condition is connected to an output terminal OUT5. Further, the cooling fan 11 is connected to an output terminal OUT6 of the microcomputer 28.

### <Operation of Charger 10>

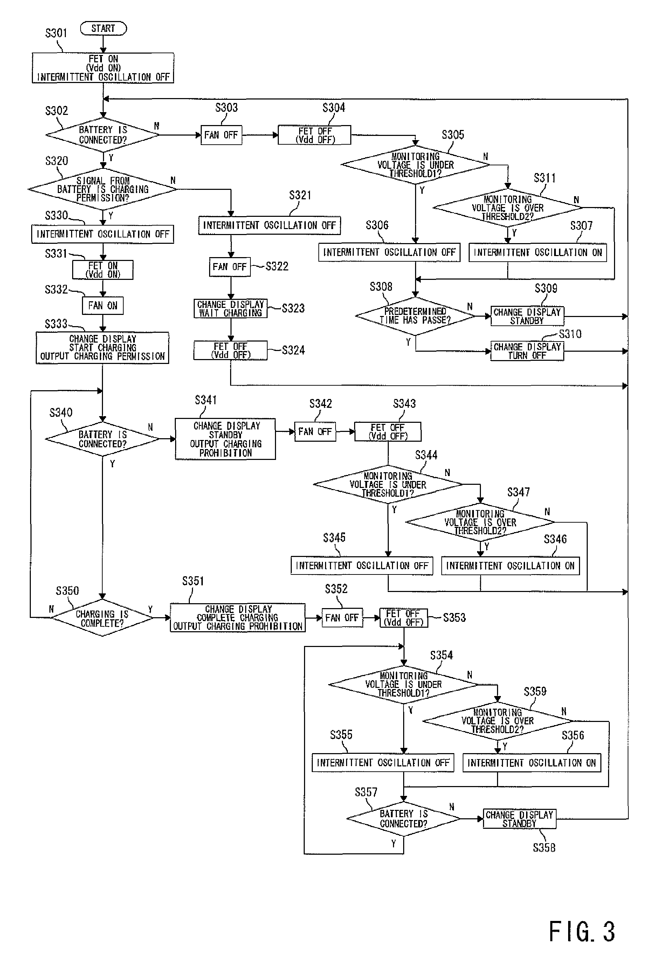

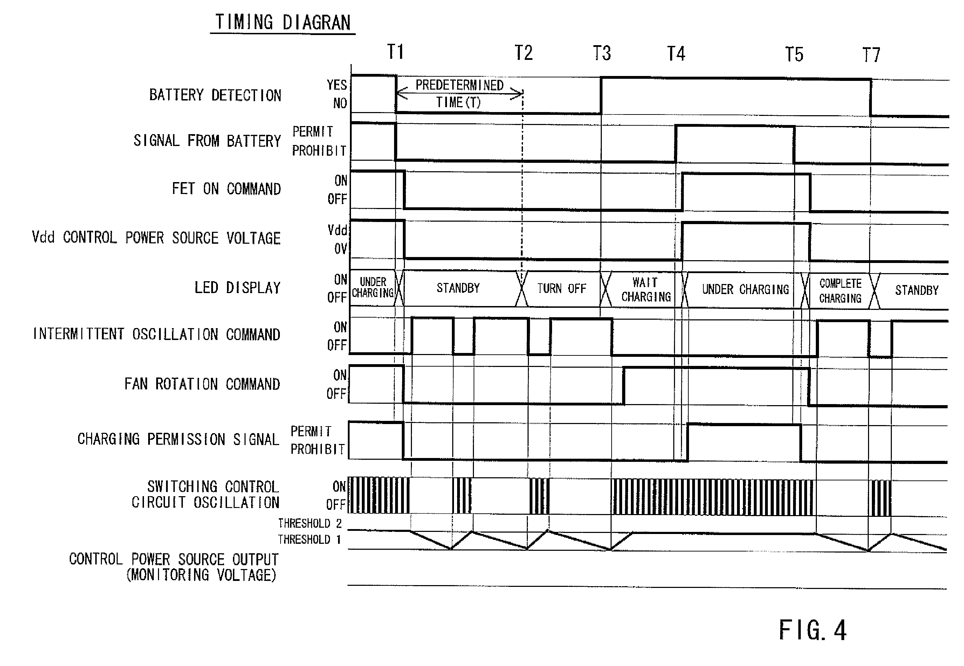

Next, an operation of the charger 10 will be described with reference to a flowchart of FIG. 3 and a timing diagram of FIG. 4. Here, a procedure shown in the flowchart of FIG. 3 is performed based on a program that is stored in a memory of the microcomputer 28.
First, descriptions are performed from a standby state in which the charger 10 is disconnected from the electric power tool battery 60, that is, a state between T1 and T2 in the timing diagram of FIG. 4. In the standby state, the plug 31 of the charging power source circuit 30 is to be connected to the outlet.
In this state, in the flowchart of FIG. 3, a judgment whether the battery is connected or not in step S302 is NO, and thus in step S303 the cooling fan 11 is turned off, and in step S304 the switching FET 57 of the constant voltage power source circuit 50 is turned off. Because of this, the Vdd power source part of the constant voltage power source circuit 50 is disconnected from the Vcc power source part, and the voltage of the Vdd power source part becomes 0 volts. As a result, the current feedback circuit 41, the voltage feedback circuit 42, and the charger temperature detection circuit 44 of the power source control circuit 40 do not operate.
When the input to the IN4 of the microcomputer 28 (monitoring voltage of the 12V power source part and the Vcc power source part) exceeds a threshold voltage (threshold 1) (NO in step S305) and is more than another threshold voltage (operation voltage (predetermined voltage)) (threshold 2) (YES in step 311), the intermittent signal (intermittent oscillation is turned on) is output to the switching control circuit 54 of the constant voltage power source circuit 50 in step S307. Then, the switching control circuit 54 intermittently performs a PWM control. That is, in step S305 and step S311, voltage monitoring of the 12V power source part and the Vcc power source part is performed, and when the monitoring voltage is more than an operation voltage (threshold 2) (YES in step S311), the PWM control is stopped. And then, the monitoring voltage is gradually decreased (refer to FIG. 4). Further, when the monitoring voltage is decreased to a predetermined voltage (threshold 1) (YES in step S305), the continuous signal (intermittent oscillation is turned off) is output (step S306), and the PWM control is performed.
Further, between the timings T1 and T2, since a judgment whether a predetermined time has passed or not is NO in step S308, a LED of the charging condition display circuit 13 that displays a standby condition is turned on in step S309.

Next, as shown in the timing diagram of FIG. 4, when the monitoring voltage increases to the operation voltage (predetermined voltages 12V and 5V (threshold 2)) by performing a PWM control, the PWM control is stopped (steps S311 and S307 in FIG. 3).
That is, when the intermittent signal is input, the switching control circuit 54 stops the PWM control while the monitoring voltage decreases from the operation (predetermined) voltage (threshold 2) to the predetermined voltage (threshold 1). And while the monitoring voltage increases from the predetermined voltage (threshold 1) to the operation (predetermined) voltage (threshold 2), the switching control circuit performs the PWM control. By repeating this, electric power consumption of the constant voltage power source circuit 50 can be reduced.
The predetermined voltage (threshold 1) is set to the minimum voltage that is required to drive the microcomputer 28.

In this way, when a predetermined time has passed while the standby state is held (timing T2 in FIG. 4), a judgment whether the predetermined time has passed or not is YES in step S308 in the flowchart of FIG. 3, and the LED for indicating the standby state of the charging condition display circuit 13 is turned off in step S310 (refer to the timing diagram of FIG. 4). This way, the consumption of the electric power of the charging condition display circuit 13 is reduced.
Next, when the electric power tool battery 60 is connected to the charger 10 (timing T3 in FIG. 4), the judgment whether the battery is connected or not is YES in step S302 of FIG. 3, and then a further judgment is made whether the battery control circuit 65 outputs the charging permission signal to the microcomputer 28 or not in step S320. Further, when the charging permission signal is not output (NO in step S320), the continuous signal is output (intermittent oscillation is turned off) (step S321), the cooling fan 11 is turned on (step S322), and an LED for indicating a charge standby state of the charging condition display circuit 13 is turned on (step S323). In addition, the switching FET 57 is maintained in an OFF state (step 324 in FIG. 3).
The aim of turning off the intermittent oscillation in step S321 is to control the voltage of the 12V power source part and the Vcc power source part of the constant voltage power source circuit 50 such that they become a constant value (12V and 5V), and also to obtain a sufficient voltage for driving the cooling fan 11.

Next, when the battery control circuit 65 outputs the charging permission signal to the microcomputer 28 (timing T4 in FIG. 4), a judgment whether the signal from the battery is the charging permission signal or not is YES in step S320 in the flowchart of FIG. 3, and the continuous signal is output in step S330 (intermittent oscillation is turned off). In addition, in step S331, the switching FET 57 of the constant voltage power source circuit 50 is turned on. Because of this, the Vcc power source part and the Vdd power source part of the constant voltage power source circuit 50 are connected to each other, and electric power is supplied from the Vcc power source part to the Vdd power source part. As a result, the current feedback circuit 41, the voltage feedback circuit 42, and the charger temperature detection circuit 44 of the power source control circuit 40 are operated (risen). Further, the cooling fan 11 is turned on (step S332), and the LED of the charging condition display circuit 13 is turned on in step S333. In addition, the charging permission signal is input to the switching control circuit 45 of the power source control circuit 40, and thus, the switching control circuit 45 is operated. Because of this, charging the cell 63 of the electric power tool battery 60 is performed.

Further, as described above, in step S330, the continuous signal is output (intermittent oscillation is turned off), and thus, the switching control circuit 54 continuously adjusts the electric power, which is supplied to the primary winding 52m of the transformer 52, by the PWM control (pulse width modulation control) such that the voltage of the secondary side winding 52n becomes 12V. Because of this, the voltages of the 12V power source part, the Vcc power source part, and the Vdd power source part of the constant voltage power source circuit 50 are maintained constant.
As a result, the cooling fan 11 and the power source control circuit 40 can be operated in a stable manner.

After that, when the charging is completed (timing T5 of FIG. 4), a judgment whether the charging is completed or not is YES in step S350 in the flowchart of FIG. 3, and the LED, which indicates a completion of the charging, of the charging condition display circuit 13 is turned on in step S351. Further, the output of the charging permission signal to the switching control circuit 45 of the power source control circuit 40 is stopped, and thus, the output of the switching control circuit 45 is stopped (step S351). In addition, the cooling fan 11 is turned off (step S352). Further, the switching FET 57 of the constant voltage power source circuit 50 is turned off (step S353), and thus, the voltage of the Vdd power source part becomes 0 volts. Consequently, the current feedback circuit 41, the voltage feedback circuit 42, and the charger temperature detection circuit 44 of the power source control circuit 40 are not operated.
Further, similar to the procedures shown in steps S305, S306, S307, and S311 as described above, the intermittent signal (intermittent oscillation is turned on) is output to the switching control circuit 54 of the constant voltage power source circuit 50 (steps S354, S355, S356, and S359).

Next, when the electric power tool battery 60 is disconnected from the charger 10 (timing T7 of FIG. 4), a judgment whether the battery is connected or not is NO in step S357 in the flowchart of FIG. 3, and the LED, which indicates a standby state, of the charging condition display circuit 13 is turned on in step S358.
If the electric power tool battery 60 is detached from the charger 10 during the charging, a judgment whether the battery is connected or not is NO in step S340 in the flowchart of FIG. 3. Then, the LED, which indicates a standby state, of the charging condition display circuit 13 is turned on in step S341, and a charging prohibition signal is output from the microcomputer 28 (step S341). And the switching FET 57 of the constant voltage power source circuit 50 is turned off (step S343). Because of this, the current feedback circuit 41, the voltage feedback circuit 42, and the charger temperature detection circuit 44 of the power source control circuit 40 are not operated.

### <Advantage of Charger 10 According to the Present Embodiment>

According to the charger 10 of the present embodiment, the microcomputer 28 operates the switching FET 57 (switch), and thus, the microcomputer 28 is configured to permit or prohibit the electric power supplied from the constant voltage power source circuit 50 to the power source control circuit 40. That is, the power source of the power source control circuit 40 is configured to be turned on or off by the microcomputer 28. Because of this, after the charging has completed, electric power consumption of the charger 10 can be reduced even when the electric power tool battery 60 is connected to the charger 10, since the microcomputer 28 turns off the power source of the power source control circuit 40 when the charging of the electric power tool battery 60 is not performed.
Further, even in the case where the electric power tool battery 60 is left unused for a long time and the battery voltage is nearly 0 volts, the microcomputer 28 can be operated regardless of the battery voltage, since the microcomputer 28 is configured such that electric power is supplied from the constant voltage power source circuit 50 of the charger 10. Because of this, operation performance of the charger 10 can be improved.

In addition, when the microcomputer 28 detects that the electric power tool battery 60 is not connected, the microcomputer 28 can turn off the power source of the power source control circuit 40. Because of this, for example, in case the electric power tool battery 60 is detached from the charger 10 during charging (even when charging permission signal is output), the power source of the power source control circuit 40 can be turned off.
In addition, when the charging of the electric power tool battery 60 is performed, it is ensured that the microcomputer 28 can turn on the power of the power source control circuit 40.
Further, when the microcomputer 28 detects that the electric power tool battery 60 is not detected, the microcomputer 28 can turn off the display of the charging condition display circuit 13 after a predetermined time has passed. This way, electric power consumption of the charging condition display circuit 13 can be reduced.

### <Modification>

The present invention is not restricted to the embodiment described above and may be modified without departing from the scope of the invention. In the present embodiment, the example is shown that the switching FET 57 performs connection and disconnection between the Vcc power source part and the Vdd power source part of the constant voltage power source circuit 50. However, instead of the switching FET 57, a transistor or other semiconductor switches may be used. Further, a mechanical contact etc. may also be used.
Further, in general, when a nickel hydride battery etc. is used, a trickle charge is performed for compensating an amount of self-charging. In this case, after charging is completed, by performing a procedure such that the intermittent oscillation is turned off => the FET is turned on => required amount is charged => the intermittent oscillation is turned on, electric consumption can be reduced when the trickle charge is not performed, while trickle charge is performed.
In the above example, the power source control circuit 40 includes the current feedback circuit 41, the voltage feedback circuit 42, and the charger temperature detection circuit 44. However, if a circuit that operates when charging current flows to the battery is required as a function of a charging power source, such as a circuit that can indicate a plurality of charging current values from the microcomputer 28 to the current feedback circuit 41, the power source control circuit 40 can include such a circuit.

### [Embodiment 2]

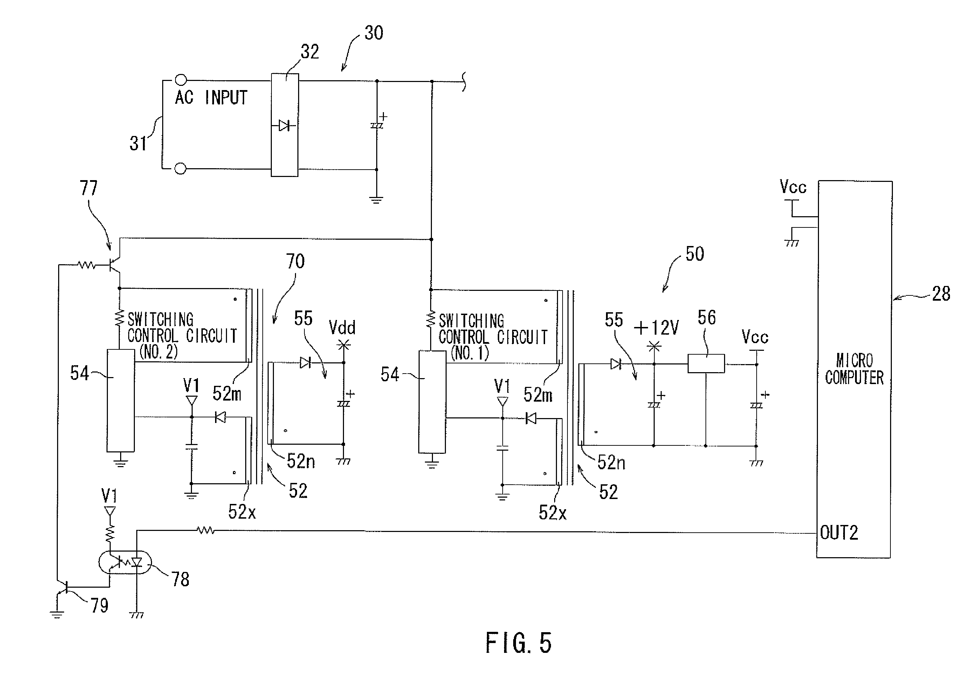

Hereinafter, a charger according to an embodiment 2 of the present invention will be described with reference to FIG. 5.
In the charger according to the present embodiment, the constant voltage power source circuit 50 of the charger 10 according to the embodiment 1 is modified such that a parallel two-power source system is used, and the switching FET 57 is not used. Other configurations are similar to those of the charger 10 of the embodiment 1. Because of this, regarding the same configuration as the charger 10 according to the embodiment 1, the same reference numerals as the charger 10 are used, and the descriptions are omitted.
As shown in FIG. 5, a constant voltage power source circuit of the charger according to the present embodiment includes a first constant voltage power source circuit 50 and a second constant voltage power source circuit 70, which are connected to each other in parallel. The first constant voltage power source circuit 50 has the same basic configuration as the constant voltage power source circuit 50 according to the embodiment 1, and the circuit 50 includes the Vcc power source part that supplies electric power to the microcomputer 28 etc., and the 12V power source part that supplies electric power to the cooling fan 11.
The second constant voltage power source circuit 70 has the same basic configuration as the first constant voltage power source circuit 50, and the circuit 70 includes the Vdd power source part that supplies electric power to the power source control circuit 40 etc.

The first constant voltage power source circuit 50 is connected to the secondary side of the rectifier 32 of the charging power source circuit 30. Because of this, electric power is always supplied to the first constant voltage power source circuit 50 from the charging power source circuit 30.
The second constant voltage power source circuit 70 is connected to the secondary side of the rectifier 32 of the charging power source circuit 30 through a power transistor 77.
The power transistor 77 permits or prohibits supply of electric power to the second constant voltage power source circuit 70, and is configured to perform the same operation as that of the switching FET 57 that is used in the embodiment 1. That is, a signal terminal (base) of the power transistor 77 is connected to the output terminal OUT2 of the microcomputer 28 through a signal transistor 79 and a third photo-coupler 78. Thus, when ON signal is output from the output terminal OUT2 of the microcomputer 28, the power transistor 77 is turned on by operations of the third photo-coupler 78 and the signal transistor 79, and then electric power is supplied from the charging power source circuit 30 to the second constant voltage power source circuit 70. Further, when OFF signal is output from the output terminal OUT2 of the microcomputer 28, the power transistor 77 is turned off by operations of the third photo-coupler 78 and the signal transistor 79, and the supply of electric power to the second constant voltage power source circuit 70 is prohibited.
As described above, the output terminal OUT2 of the microcomputer 28 is configured such that when the microcomputer 28 detects that the charger 10 is connected to the electric power tool battery 60 and also the charging permission signal is output, ON signal is output from the output terminal OUT2 of the microcomputer 28. In other timing except the above, OFF signal is output from the output terminal OUT2 of the microcomputer 28.

Because of this, when the charger 10 and the electric power tool battery 60 are connected to each other and charging is performed, the power transistor 77 is turned on and electric power is supplied to the second constant voltage power source circuit 70. Then, electric power is supplied from the Vdd power source part of the second constant voltage power source circuit 70 to the power source control circuit 40 etc. Further, in case the charger 10 is detached from the electric power tool battery 60 during charging, or when charging is completed, the power transistor 77 is turned off and the supply of electric power to the second constant voltage power source circuit 70 is prohibited. In this way, the supply of electric power from the Vdd power source part of the second constant voltage power source circuit 70 to the power source control circuit 40 etc. is prohibited. As a result, the electric power consumption of the charger 10 after the completion of the charging can be reduced.
Here, the Vcc power source of the first constant voltage power source circuit 50 is always maintained to the ON state, and thus electric power is always supplied to the microcomputer 28. Because of this, the microcomputer 28 is always operated regardless of the battery voltage of the electric power tool battery 60.

### Explanation of symbols

- 10: charger
- 11: cooling fan
- 13: charging condition display circuit
- 14: warning circuit
- 16: battery temperature detection circuit
- 28: microcomputer
- 30: charging power source circuit
- 40: power source control circuit
- 41: current feedback circuit
- 42: voltage feedback circuit
- 44: charger temperature detection circuit
- 50: constant voltage power source circuit, first constant voltage power source circuit
- 57: switching FET (switch)
- 60: electric power tool battery (battery)
- 65: battery control circuit
- 70: second constant voltage power source circuit

## Claims

1. A charger comprising:
a charging power source circuit for charging a battery that supplies electric power to an electric power tool;
a power source control circuit that controls the charging power source circuit;
a microcomputer that operates the power source control circuit; and
a constant voltage power source circuit that supplies electric power to the power source control circuit and the microcomputer,
wherein the microcomputer is configured to permit or prohibit supply of electric power from the constant voltage power source circuit to the power source control circuit.

2. The charger according to claim 1, wherein:
a switch is provided between the constant voltage power source circuit and the power source control circuit, the switch permitting or prohibiting the supply of electric power from the constant voltage power source circuit to the power source control circuit; and
the microcomputer is configured to operate the switch.

3. The charger according to claim 1, wherein:
the constant voltage power source circuit includes a first constant voltage power source circuit that supplies electric power to the microcomputer and a second constant voltage power source circuit that supplies electric power to the power source control circuit; and
the microcomputer is configured to operate the second constant voltage power source circuit.

4. The charger according to any one of claims 1 to 3, wherein:
the microcomputer is configured to detect that the charger is connected to the battery or disconnected from the battery; and
the microcomputer prohibits the supply of electric power to the power source control circuit, at least when the microcomputer detects that the charger is disconnected from the charger.

5. The charger according to any one of claims 1 to 4, wherein:
the power source control circuit is configured receive a charging permission signal from the microcomputer and control charging of the battery; and
the microcomputer permits supply of electric power to the power source control circuit when the charging permission signal is output to the power source control circuit, and prohibits supply of electric power to the power source control circuit when the output of the charging permission signal to the power source control circuit is stopped.

6. The charger according to any one of claims 1 to 5, wherein:
a display circuit that displays a charging condition is provided; and
when the microcomputer detects that the charger is connected to the battery, the microcomputer outputs to the display circuit a signal that indicates the charging condition.

7. The charger according to claim 6, wherein the microcomputer outputs to the display circuit a signal that indicates turning off the display of the charging condition, after the microcomputer detects that the charger is disconnected from the battery and the disconnected condition continues for a predetermined time.

8. The charger according to any one of claims 1 to 7, wherein the power source control circuit includes a current feedback circuit and/or a voltage feedback current circuit.

9. The charger according to any one of claims 1 to 8, wherein the power source control circuit includes a circuit that detects temperature in the charger or temperature of an element in the charger.
